# EUROPÄISCHE PATENTSCHRIFT

(11) **EP 0 768 545 B1**
(45) Veröffentlichungstag und Bekanntmachung des Hinweises auf die Patenterteilung: **12.06.2002**
(21) Anmeldenummer: 96113873.2
(22) Anmeldetag: 29.08.1996
(51) Int. Cl.: G01V 8/10, G01S 7/483

(54) **Verfahren zum Betrieb eines optischen Lichttasters**
Method for operating a light sensor
Procédé pour faire fonctionner un transducteur optique

(30) Priorität: 09.10.1995 DE 19537615
(43) Veröffentlichungstag der Anmeldung: 16.04.1997
(73) Patentinhaber: Sick AG, 79183 Waldkirch, Breisgau (DE)
(72) Erfinder: Blümcke, Thomas, 79261 Gutach (DE); Bürger, Jürgen, 79312 Emmendingen (DE); Kuhn, Fritz, 79183 Waldkirch (DE); Leiting, Klaus-Jürgen, 79331 Teningen (DE)
(74) Vertreter: Finsterwald, Martin, Dr.

(56) Entgegenhaltungen:
- DE-A- 3 823 007
- DE-A- 4 031 142
- DE-A- 4 141 469
- DE-A- 4 324 590
- DE-C- 4 319 451

## Beschreibung

Die vorliegende Erfindung betrifft ein Verfahren zum Betrieb eines optischen Lichttasters zur Feststellung von in einem Überwachungsbereich vorhandenen Gegenständen. Weiterhin ist die Erfindung auf einen solchen Lichttaster gerichtet.

Optische Lichttaster sind üblicherweise als Reflexions- oder Transmissionslichttaster ausgebildet. Bei einem Reflexionslichttaster werden die ausgesandten Lichtsignale von einem im Überwachungsbereich befindlichen Gegenstand reflektiert und die reflektierten Lichtsignale von einem Lichtempfänger empfangen, so daß aufgrund der empfangenen Lichtsignale das Vorhandensein des Gegenstands im Überwachungsbereich erkannt wird. Demgegenüber werden bei einem Transmissionslichttaster die ausgesandten Lichtsignale bei Abwesenheit eines Gegenstandes im Überwachungsbereich von einem Lichtempfänger entweder direkt oder über einen Reflektor empfangen, wobei das Empfangen der ausgesandten Lichtsignale durch einen im Überwachungsbereich vorhandenen Gegenstand unterbrochen wird oder zumindest die empfangenen Lichtsignale dadurch geschwächt werden, so daß dadurch das Vorhandensein eines Gegenstandes im Überwachungsbereich erkannt wird.

Als Lichtsignale können beispielsweise Lichtimpulse oder Folgen von Lichtimpulsen verwendet werden. An jeden ausgesandten Lichtimpuls bzw. an jede ausgesandte Lichtimpulsfolge schließt sich eine gegenüber der Lichtimpulsdauer bzw. der Dauer der Lichtimpulsfolge vergleichsweise lange Pause an, nach welcher das nächste Lichtsignal ausgesandt wird. Durch die Verwendung von Lichtimpulsen bzw. Folgen von Lichtimpulsen wird gegenüber einem kontinuierlichen Sendebetrieb bei gleichen Verlustleistungen ein für die kurze Sendezeitspanne verbessertes Signal/Rausch-Verhältnis erzielt. Weiterhin kann durch Einschaltung eines Hochpasses in die Empfangssignalverarbeitungsstufe der Einfluß von Gleichlicht auf einfache Weise eliminiert werden.

Problematisch bei der Verwendung von optischen Lichttastern ist, daß durch von außen einwirkendes Störlicht sowohl im Überwachungsbereich vorhandene Gegenstände nicht erkannt werden können als auch das Vorhandensein von Gegenständen im Überwachungsbereich fälschlicherweise detektiert werden kann. Die am häufigsten auftretenden Störsignale können dabei in in folgende drei Klassen eingeteilt werden:
1. Periodische sinusförmige Signale mit hohem Oberwellengehalt, wie sie beispielsweise von Neon-Röhren mit elektronischen Vorschaltgeräten (im folgenden mit HF-Lampen bezeichnet) erzeugt werden,
2. periodische rechteckförmige Signale mit beliebigem Tastverhältnis, wie sie beispielsweise von benachbart angeordneten Lichttastern ausgesandt werden, und
3. einmalig auftretende Störsignale (im folgenden als einmalige Störsignale bezeichnet), die durch beliebige Einwirkung von außen auf die Lichtempfänger treffen können.

Im Gegensatz zu einmalig auftretenden Störsignalen werden im folgenden periodische sinusförmige oder rechteckförmige Signal sowie stochastische Störsignale mit variabler Amplitude als Wechsel-Störsignale bezeichnet.

Aus der DE 43 19 451 C1 ist ein Verfahren der eingangs genannten Art bekannt. Bei diesem Verfahren wird im störungsfreien Fall in regelmäßigen Abständen ein Nutzlichtsignal in den Überwachungsbereich ausgesandt. Jeweils unmittelbar vor Aussenden des Lichtsignals wird überprüft, ob ein Störsignal empfangen wird. Ist dies der Fall, so wird das Aussenden des Nutzlichtsignals verzögert.

Aus der DE 40 31 142 A1 ist ebenfalls ein Verfahren zum Betrieb eines optischen Lichttasters zur Feststellung von Gegenständen in einem Überwachungsbereich bekannt. Auch bei diesem Verfahren wird im Falle eines Störsignals das Aussenden des Nutzlichtsignals verzögert, um dadurch ein fehlerhaftes Gegenstandsfeststellungssignal vermeiden zu können.

Der vorliegenden Erfindung liegt die Aufgabe zugrunde, ein Verfahren zum Betrieb eines optischen Lichttasters sowie einen optischen Lichttaster zu schaffen, die eine hohe Störfestigkeit, insbesondere gegenüber einer Störung durch von außen einwirkendes Störlicht der oben angegebenen Arten aufweisen, wobei gleichzeitig der Betrieb mit einer hohen Schaltfrequenz möglich sein soll.

Diese Aufgabe wird nach der Erfindung durch ein Verfahren zum Betrieb eines optischen Lichttasters zur Feststellung von in einem Überwachungsbereich vorhandenen Gegenständen gelöst, bei dem in bestimmten zeitlichen Abständen Lichtsignale in den Überwachungsbereich ausgesandt, die ausgesandten Lichtsignale sowie auftretende Störsignale empfangen und zur Feststellung der im Überwachungsbereich vorhandenen Gegenstände ausgewertet werden, wobei das Aussenden und Empfangen der Lichtsignale sowie das Empfangen der Störsignale jeweils in zeitlich aufeinanderfolgenden Rahmenintervallen erfolgt, bei Abwesenheit eines Störsignals innerhalb eines Rahmenintervalls das Aussenden des Lichtsignals am einen Norm-Sendezeitpunkt des jeweiligen Lichtsignals definierenden Ende des Rahmenintervalls erfolgt, und bei Auftreten eines Störsignals innerhalb eines Rahmenintervalls das Aussenden des nächsten Lichtsignals gegenüber seinem Norm-Sendezeitpunkt zeitlich vorgezogen wird.

Durch das erfindungsgemäße Verfahren wird erreicht, daß im Störungsfall ein optimaler Sendezeitpunkt für das Lichtsignal innerhalb eines Rahmenintervalls bestimmt wird, so daß die Auswirkung des Störsignals auf das empfangene Lichtsignal minimal ist. Bei Auftreten eines einmaligen Störsignals wird das Aussenden des Lichtsignals normalerweise nach dessen Abklingen und bei einem Wechsel-Störsignal in einer günstigen Phase diese Störsignals ausgesandt. Durch die Vorgabe eines Rahmenintervalls, innerhalb dessen das Lichtsignal ausgesandt wird, kann eine bestimmte, hohe Schaltfrequenz bei gleichzeitiger hoher Störsicherheit erreicht werden. Insbesondere ist dadurch, daß in jedem Rahmenintervall einmal ein Lichtsignal ausgesandt wird, gewährleistet, daß im Mittel eine konstante Signalaussendung erfolgt.

Nach einer bevorzugten Ausführungsform der Erfindung wird das innerhalb eines Rahmenintervalls auftretende Störsignal als Wechsel-Störsignal oder als einmaliges Störsignal klassifiziert und abhängig von der jeweiligen Klassifizierung bzw. von der Abwesenheit eines Störsignals im Rahmenintervall der Zeitpunkt für das Aussenden des Lichtsignals bestimmt. Durch die Klassifizierung der auftretenden Störsignale kann für jede Klasse von Störsignalen eine optimale Störminimierung erreicht werden. Das erfindungsgemäße Verfahren kann jedoch auch ohne Klassifizierung verwendet werden, wenn beispielsweise nur eine bestimmte Klasse von Störsignalen auftreten kann.

Nach einer weiteren vorteilhaften Ausführungsform der Erfindung wird die Störsignalauswertung zur Bestimmung des optimalen Sendezeitpunktes des Lichtsignals während des Aussendens des Lichtsignals unterbrochen. Dies kann beispielsweise dadurch erreicht werden, daß während der Dauer des Aussendens des Lichtsignals das empfangene Gesamtlichtsignal lediglich zur Auswertung bezüglich des Feststellen eines Gegenstandes im Überwachungsbereich verwendet wird, während außerhalb der Dauer des Aussendens des Lichtsignals das empfange Störsignal ausschließlich zur Bestimmung eines optimalen Aussendezeitpunktes für das nächste Lichtsignal ausgewertet wird. Dadurch wird erreicht, daß innerhalb des Sendeintervalls empfangene Lichtsignale nicht fälschlicherweise als Störsignale interpretiert werden und die Aussendung des nächsten Lichtsignals beeinflussen.

Der die Vorrichtung betreffende Teil der Aufgabe wird durch einen Lichttaster nach Anspruch 12 gelöst. Dabei wird durch die Verwendung eines Zählers erreicht, daß auf einfache Weise der optimale Sendezeitpunkt für das Lichtsignal innerhalb eines Rahmeintervalls bestimmbar ist, so daß die Auswirkung des Störsignals auf das empfangene Lichtsignal minimal ist.

Weitere vorteilhafte Ausführungsformen des erfindungsgemäßen Verfahrens und des Lichttasters sind in den Unteransprüchen angegeben.

Die Erfindung wird nachfolgend anhand eines Ausführungsbeispiels unter Bezugnahme auf die Zeichnungen näher erläutert; in diesen zeigen:
- Fig. 1: ein Signal-Zeit-Diagramm zur Verdeutlichung des erfindungsgemäßen Verfahrens bei Abwesenheit eines Störsignals,
- Fig. 2: ein Signal-Zeit-Diagramm bei Auftreten eines einmaligen Störsignals,
- Fig. 3: ein Signal-Zeit-Diagramm nach einer weiteren Ausführungsform des erfindungsgemäßen Verfahrens bei Abwesenheit eines Störsignals,
- Fig. 4: ein Signal-Zeit-Diagramm nach einer weiteren Ausführungsform des erfindungsgemäßen Verfahrens bei Auftreten eines einmaligen Störsignals,
- Fig. 5: ein Signal-Zeit-Diagramm bei Auftreten eines sinusförmigen Störsignals,
- Fig. 6: ein die Auswertung der empfangenen Signale verdeutlichender Ausschnitt eines Signal-Zeit-Diagramms,
- Fig. 7: einen typischen Verlauf des Eingangssignals eines Lichtempfängers beim Lichtempfang von HF-Lampen und
- Fig. 8: ein Blockschaltbild eines erfindungsgemäß ausgebildeten Lichttasters.

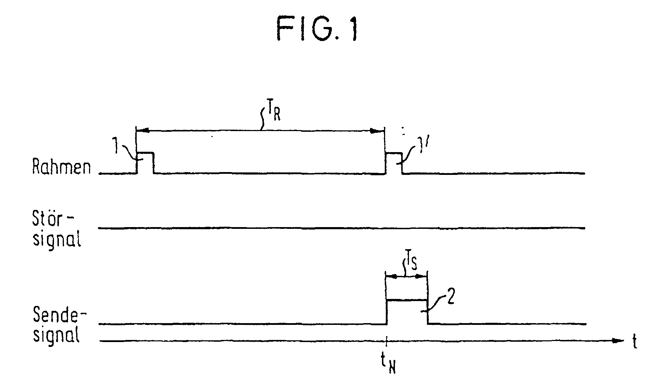

Dem erfindungsgemäßen Verfahren liegt die Vorgabe eines zeitlichen Rasters (Rahmen) zugrunde, das in Fig. 1 durch Rahmenimpulse 1, 1' definiert ist, welche in zeitlichen Abständen T_{R} nacheinander angeordnet sind und dadurch Rahmenintervalle T_{R} bilden.

Beginnend mit dem Rahmenstart wird das empfangene Signal beobachtet und auf den Empfang von Störsignalen innerhalb des Rahmenintervalls T_{R} hin untersucht, um abhängig von einem auftretenden Störsignal den optimalen Zeitpunkt für das Aussenden des nächsten Lichtsignals zu bestimmen. Tritt bis zum Ende des Rahmenintervalls T_{R} kein Störsignal auf, so wird das nächste Lichtsignal zu seinem Norm-Sendezeitpunkt t_{N} ausgesandt, wie es in Fig. 1 dargestellt ist. In Fig. 1 ist das Lichtsignal durch einen rechteckförmigen Sendeimpuls 2 mit der Breite T_{S} (Sendeintervall T_{S}) dargestellt. Das Lichtsignal kann jedoch beispielsweise auch durch eine Folge von Lichtimpulsen oder durch ein beliebig geformtes Signal gebildet werden.

Während des Sendeintervalls T_{S} wird die Auswertung des empfangenen Signals zur Bestimmung eines optimalen Sendezeitpunktes unterbrochen und das Empfangssignal für die Feststellung von im Überwachungsbereich vorhandenen Gegenständen verwendet. Je nachdem, ob das Verfahren bei einem Reflexionsoder bei einem Transmissionslichttaster verwendet wird, gibt ein während des Sendeintervalls T_{S} empfangener Signalwert das Vorhandensein oder die Abwesenheit eines Gegenstandes im Überwachungsbereich an.

Nach dem Ende des Sendeintervalls T_{S} wird wieder auf das Empfangen und Auswerten eines Störsignals umgeschaltet, um abhängig von einem im nächsten Rahmenintervall T_{R} auftretenden Störsignal den optimalen Sendezeitpunkt des nächsten Sendeimpulses zu bestimmen. Es ist jedoch auch möglich die Auswertung des empfangenen Signals zur Bestimmung des optimalen Sendezeitpunktes während des Sendeintervalls T_{S} parallel weiterlaufen zu lassen, so daß auf diese Weise die Bestimmung des optimalen Sendezeitpunktes für das nächste Lichtsignal bereits früher beginnt. Dies ist insbesondere dann sinnvoll, wenn die Aussendung des aktuellen Lichtsignals am Ende des Rahmens erfolgt und sich das Sendeintervall T_{S} in den Anfang des nächsten Rahmens hinein erstreckt.

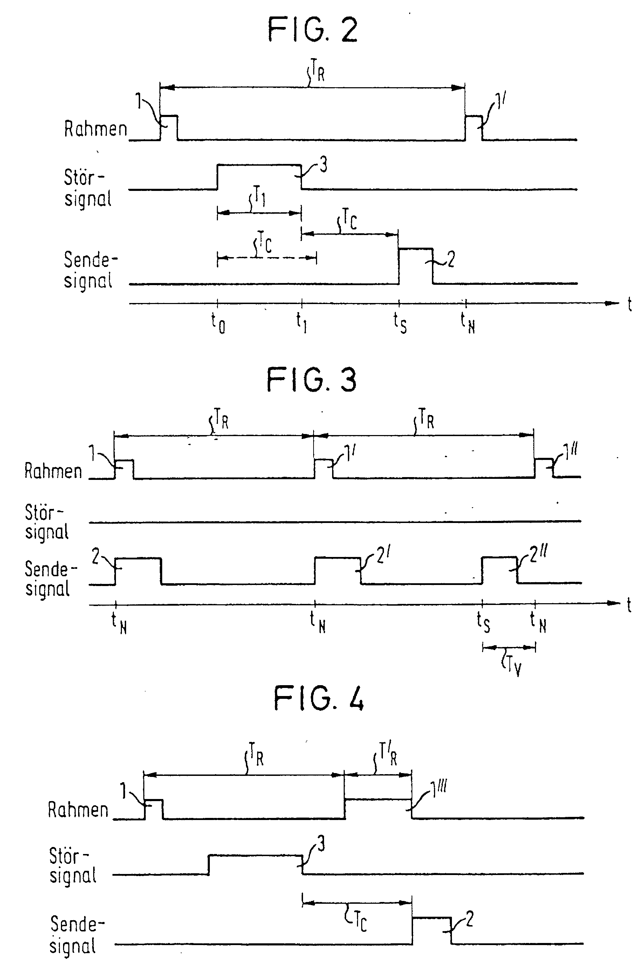

Tritt während eines Rahmenintervalls T_{R} ein einmaliges Störsignal 3 auf, wie es in Fig. 2 dargestellt ist, so wird mit dem Beginn des Störsignals 3 zum Zeitpunkt t₀ eine in Fig. 2 gestrichelt dargestellte Wartezeit T_{C} ausgelöst. Tritt während der Wartezeit T_{C} erneut eine Signalflanke auf, wie es in Fig. 2 zum Zeitpunkt tᵢ der Fall ist, so wird die Wartezeit T_{C} vorzeitig beendet und erneut gestartet.

Da bei dem in Fig. 2 dargestellten Fall innerhalb dieser zweiten Wartezeit T_{C} kein weiteres Störsignal auftritt, wird nach Ablauf der zweiten Wartezeit T_{C} der Sendeimpuls 2 zeitlich vor seinem Norm-Sendezeitpunkt t_{N} zum Zeitpunkt t_{S} ausgesandt. Ist die Dauer Tₗ des Störsignals 3 länger als die Wartezeit T_{C}, so wird der Sendeimpuls 2 während des hohen Störpegels ausgesandt. Vorteilhaft wird daher nicht der Pegel des empfangenen Signals direkt, sondern die Pegeldifferenz des Empfangssignals während des Sendeintervalls T_{S} und des Empfangssignals kurz vor Beginn des Sendeintervalls T_{S} als Detektionssignal ausgewertet. Auf diese Weise wird verhindert, daß ein während des Sendeintervall T_{S} empfangenes Störsignal, das den für eine Detektion vorgegebenen Schwellenwert überschreitet, ein fehlerhaftes Gegenstands-Feststellungssignal auslöst.

Das Auslösen der Wartezeiten T_{C} kann durch das Auftreten von Signalflanken, aber auch durch Erreichen bzw. Über- oder Unterschreiten von vorgegebenen Schwellenwerten gesteuert werden. Dabei wird eine Wartezeit T_{C} vorteilhaft nur dann ausgelöst, wenn ein positiver Schwellenwert über- oder ein negativer Schwellenwert unterschritten wird. Damit wird beispielsweise gewährleistet, daß durch ausklingende Überschwingvorgänge keine weitere Wartezeit T_{C} ausgelöst wird.

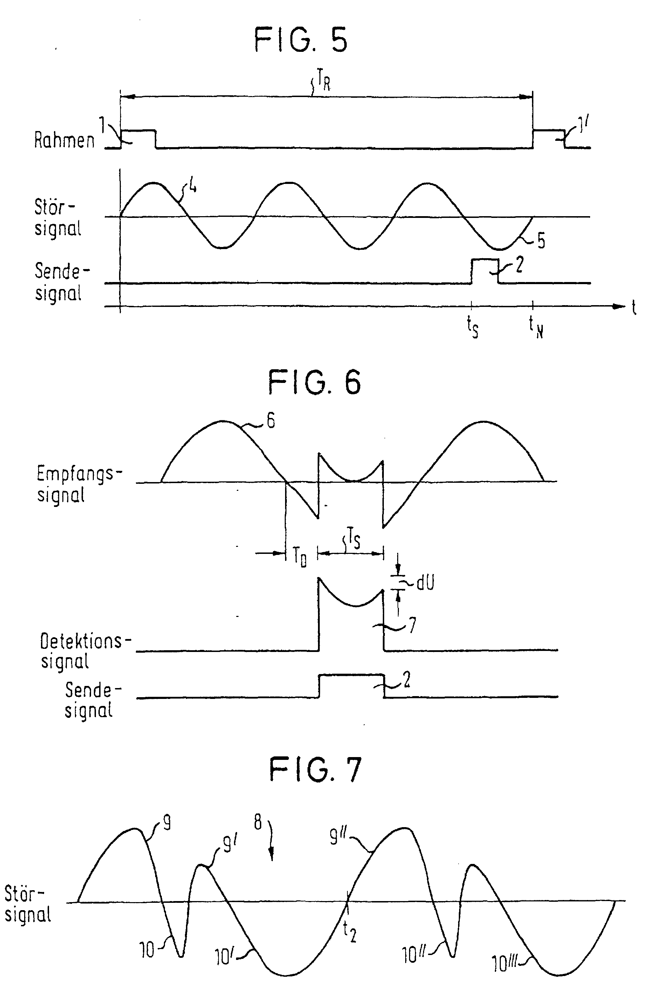

Die Wartezeiten können beispielsweise durch einen Zähler realisiert werden, wie es zur Fig. 7 näher beschrieben ist, wobei die Länge der Wartezeit T_{C} durch einen vorgebbaren Zählerstand definierbar ist.

Eine Entscheidung, ob es sich bei dem vorliegenden Störsignal um ein einmaliges Störsignal oder um ein Wechsel-Störsignal handelt, kann beispielsweise dadurch erfolgen, daß die Anzahl der ausgelösten Wartezeiten T_{C} gezählt wird. Beispielsweise können bei rechteckförmigen Störsignalen, wie sie in Fig. 2 dargestellt sind, maximal drei Wartezeiten T_{C} ausgelöst werden, nämlich durch die ansteigende Flanke, durch die abfallende Flanke und durch das Ende des sich an die abfallende Flanke anschließenden Überschwingvorgangs. Falls somit durch das Störsignal eine vierte Wartezeit T_{C} ausgelöst wird bzw. die dritte Wartezeit T_{C} vorzeitig beendet wird, handelt es sich nach dem erfindungsgemäßen Verfahren nicht um ein einmaliges Störsignal, sondern um ein Wechsel-Störsignal, das beispielsweise gemäß der Beschreibung der Fig. 5 bis 7 behandelt wird. Auf diese Weise kann die Anzahl der auftretenden Wartezeiten T_{C} bzw. der vorzeitige Abbruch einer Wartezeit T_{C} als eindeutiges Unterscheidungsmerkmal zwischen einmaligen Störsignalen und Wechsel-Störsignalen verwendet werden.

Fig. 3 zeigt eine besondere Ausführungsform des erfindungsgemäßen Verfahrens für den Fall, daß während einer größeren Anzahl von aufeinanderfolgenden Rahmenintervallen kein Störsignal auftritt. Wie zu Fig. 1 beschrieben ist, wird normalerweise im störungsfreien Fall der Sendeimpuls 2 zu seinem Norm-Sendezeitpunkt t_{N} am Ende des Rahmenintervalls T_{R} ausgesandt. Damit stellt jedoch das Rahmenende einen kritischen Zeitpunkt bezüglich der Störerkennung und -unterdrückung dar.

Fallen beispielsweise die ausgesandten Sendeimpulse eines benachbart angeordneten Lichttasters mit den jeweiligen Rahmenenden und damit mit den Sendezeitpunkten im störungsfreien Fall eines nach dem erfindungsgemäßen Verfahren arbeitenden Lichttasters zusammen und werden diese ausgesandten Fremd-Sendeimpulse von dem nach dem erfindungsgemäßen Verfahren arbeitenden Lichttaster als Störsignale empfangen, so können diese Störsignale nicht zur Bestimmung der optimalen Sendezeitpunkte der Lichtsignale verwendet werden. Darüber hinaus können die als Störsignale empfangenen Sendeimpulse des benachbarten Lichttasters zu einer fehlerhaften Auswertung des empfangenen Lichtsignals führen, da je nach Art des Lichttasters fälschlicherweise das Vorhandensein oder die Abwesenheit eines Gegenstandes im Überwachungsbereich detektiert werden kann.

Dies wird nach der in Fig. 3 dargestellten Ausführungsform des erfindungsgemäßen Verfahrens dadurch verhindert, daß das Aussenden des Sendeimpulses 2" bereits zu einem Zeitpunkt t_{S} stattfindet, der gegenüber dem Norm-Sendezeitpunkt t_{N} des Sendeimpulses 2'' um ein Zeitintervall T_{V} vorgezogen ist, wenn weder im aktuellen Rahmenintervall T_{R} bis zum Zeitpunkt t_{S} noch in einem der drei vorhergehenden Rahmenintervalle ein Störsignal erkannt worden ist. Auf diese Weise werden jeweils parallel mit den Rahmenenden empfangene Störsignale, wie sie beispielsweise von einem benachbart angeordneten Lichttaster erzeugt werden können, nach Aussenden des Sendeimpulses 2'' im Sendeintervall T_{S} erkannt, so daß aufgrund dieser Störimpulse der optimale Sendezeitpunkt für das nächste Lichtsignal bestimmt werden kann, wie es zu Fig. 2 beschrieben wurde.

In Fig. 4 ist ein Sonderfall des nach Fig. 2 beschriebenen Verfahrens zur erfindungsgemäßen Behandlung von einmaligen Störsignalen dargestellt. Wie im Zeitdiagramm nach Fig. 2 wird durch das Ende des Störimpulses 3 eine Wartezeit T_{C} ausgelöst. Da im Beispiel nach Fig. 4 das Ende der Wartezeit T_{C} zeitlich nach dem Ende des Rahmenintervalls T_{R} liegen würde, wird in diesem Fall das Rahmenintervall um das Restintervall T'_{R} verlängert, so daß das Ende der Wartezeit T_{C} mit dem Ende des Gesamtrahmenintervalls T_{R} + T'_{R} zusammenfällt. Mit Ablauf der Wartezeit T_{C} wird anschließend, wie im Fall nach Fig. 2, der Sendeimpuls 2 ausgesandt. Das sich an das verlängerte Rahmenintervall T_{R} + T'_{R} anschließende Rahmenintervall T_{R} weist wieder die ursprüngliche Länge auf.

Auf diese Weise wird beispielsweise erreicht, daß die ausgesandten Lichtsignale von zwei benachbart angeordneten, mit gleicher Sendefrequenz arbeitenden Lichttastern am Rahmenende nicht zu Kollisionen führen. Durch die Verlängerung des Rahmenintervalls einer der beiden Lichttaster wird erreicht, daß die Phase zwischen den Rahmensignalen der beiden Lichttaster einmalig in der Weise verschoben wird, daß keine Kollisionen mehr auftreten. Auf diese Weise ist gewährleistet, daß die Sendeimpulse der beiden Systeme zeitversetzt zueinander ausgesandt werden und infolgedessen keine gegenseitigen Störungen bedingen.

In Fig. 5 ist ein periodisches, sinusförmiges Störsignal dargestellt. Wie bei der Auswertung von einmaligen Störsignalen wird zunächst mit Beginn des Rahmenintervalls T_{R} das empfangene Signal beobachtet und nach seiner Art klassifiziert. Dies kann beispielsweise, wie zu Fig. 2 beschrieben, dadurch geschehen, daß bei Erreichen bzw. Überschreiten und Unterschreiten von vorgegebenen Schwellenwerten Wartezeiten T_{C} ausgelöst werden, und bei Auslösen von mehr als drei Wartezeiten T_{C} bzw. bei einem vorzeitigen Abbruch der dritten Wartezeit T_{C} das empfangene Störsignal als Wechsel-Störsignal, beispielsweise als sinusförmiges Störsignal nach Fig. 5, klassifiziert wird. Vorteilhaft lösen dabei kurz hintereinander auftretende Über- oder Unterschreitungen der Schwellenwerte, wie sie beispielsweise bei Signal-Nulldurchgängen vorhanden sind, nur eine Wartezeit T_{C} aus. Grundsätzlich ist es vorteilhaft, wenn die empfangenen Signale vor der Auswertung von Gleichsignalanteilen bereinigt werden.

Nach erfolgter Klassifizierung als Wechsel-Störsignal wird die nächste negative Halbwelle 5 des Störsignals ermittelt und der nächste Sendeimpuls 2 während der Dauer der negativen Halbwelle 5 ausgesandt. Das Aussenden des Sendeimpulses 2 erfolgt somit zu einem Zeitpunkt t_{S}, der gegenüber dem Norm-Sendezeitpunkt t_{N} zeitlich vorgezogen ist.

Enthält das Störsignal keine negativen Halbwellen, so wird das Störsignal ausschließlich durch die positiven Halbwellen als Wechsel-Störsignal klassifiziert und nach erfolgter Klassifizierung der Sendeimpuls 2 in dem nächsten zwischen zwei positiven Halbwellen liegenden störungsfreien Intervall ausgesandt. Durch das Aussenden des Sendeimpulses 2 innerhalb der negativen Halbwelle bzw. innerhalb des störungsfreien Zwischenintervalls wird gewährleistet, daß unter keinen Umständen eine Fehlerkennung eines im Überwachungsbereich vorhandenen Gegenstandes auftritt, wie im folgenden zu Fig. 6 näher erläutert wird.

Fig. 6 zeigt in der oberen Hälfte das Empfangssignal 6, das sich aus dem sinusförmigen Störsignal 4 nach Fig. 5 und dem beispielsweise an einem im Überwachungsbereich vorhandenen Gegenstand reflektierten Sendeimpuls 2 zusammensetzt. Der Sendeimpuls 2 wurde während des Empfangens der negativen Halbwelle des sinusförmigen Störsignals 4 um ein Zeitintervall T_{D} nach dem Beginn der negativen Halbwelle ausgesandt, so daß sowohl der Anfang als auch das Ende des Sendeintervalls T_{S} während des Empfangs der negativen Halbwelle des sinusförmigen Störsignals 4 zu liegen kommen.

Auf diese Weise wird erreicht, daß das Detektionssignal 7, welches lediglich während des Sendezeitintervalls T_{S} zur Erkennung eines Gegenstandes im Überwachungsbereich ausgewertet wird, über seine gesamte Dauer einen geringeren Pegel besitzt als das entsprechende Detektionssignal im störungsfreien Fall. Das heißt, daß die Differenz dU dieser Pegel negativ ist. Liegt der Pegel des Detektionssignals 7 am Ende des Signalintervalls T_{S} oberhalb eines vorgegebenen Schwellenwertes, so wird dies als Erkennung eines im Überwachungsbereich vorhandenen Gegenstandes bewertet. Da durch die Überlagerung des empfangenen Sendesignals mit der negativen Halbwelle des Störsignals in allen Fällen nur eine Verringerung des Detektionspegels möglich ist, kann somit ein fälschlicherweises Erkennen eines Gegenstandes ausgeschlossen werden.

Wird anstelle der direkten Pegeldetektion das Auswerteverfahren mit Hilfe einer Signalintegration durchgeführt, ergeben sich äquivalente Signalverläufe mit einem Phasenversatz zwischen Sendeimpuls und Störsignal.

Fig. 7 zeigt eine typische Signalform, welche durch eine reale HF-Lampe in einem Lichtempfänger erzeugt wird. Im Gegensatz zu dem sinusförmigen Störsignal 4 nach Fig. 5, weist dieses Störsignal 8 unterschiedlich lange positive und negative Halbwellen 9, 9', 10, 10' auf. Da die Dauer der kürzeren negativen Halbwelle üblicherweise geringer ist als die Dauer des Sendeintervalls T_{S}, muß gewährleistet sein, daß der Sendeimpuls 2 während des Empfangs der längeren negativen Halbwelle 10' ausgesandt wird.

Daher wird nach dem erfindungsgemäßen Verfahren nach Klassifizierung als periodisches Störsignal zunächst die längste negative Halbwelle bestimmt, und anschließend der Sendeimpuls während der nächsten längsten negativen Halbwelle ausgesandt. Ist beispielsweise zum Zeitpunkt t₂ in Fig. 7 die zweite negative Halbwelle 10' als längere negative Halbwelle erkannt worden, so muß vor dem Aussenden des Sendeimpulses 2 bis zur übernächsten negativen Halbwelle 10''' gewartet werden.

Die Klassifizierung und die Bestimmung der Länge der negativen Halbwellen erfolgen dabei folgendermaßen:

Durch den Beginn der ersten positiven Halbwelle 9 wird ein Zählvorgang in aufsteigender Richtung gestartet. Mit Beginn der ersten negativen Halbwelle 10 wird der Zähler zurückgesetzt und erneut ein Zählvorgang gestartet, der mit dem Ende der ersten negativen Halbwelle 10 gestoppt wird. Durch das Anhalten des zweiten Zählvorganges ist das Störsignal damit als Wechsel-Störsignal klassifiziert. Der erreichte Zählerstand stellt einen für die Dauer der ersten negativen Halbwelle 10 repräsentativen Wert dar. Mit Beginn der zweiten negativen Halbwelle 10' wird der Zähler beispielsweise in Abwärtsrichtung gestartet bis der Zählerstand zu Beginn der nächsten positiven Halbwelle 9" wiederum gestoppt wird. Da der End-Zählerstand zu diesem Zeitpunkt positiv ist, wird die zweite negative Halbwelle 10' als längere negative Halbwelle erkannt und der Sendeimpuls 2 während der übernächsten negativen Halbwelle 10"' ausgesandt.

Falls der End-Zählerstand negativ ist, wird entsprechend der Sendeimpuls 2 während der nächsten negativen Halbwelle ausgesandt.

Weist das Störsignal mehr als zwei unterschiedlich lange negative Halbwellen auf, so können die Längen der negativen Halbwellen beispielsweise durch Abspeichern der jeweils am Ende der negativen Halbwellen erreichten Zählerstände erfaßt und nach Erkennen einer vollständigen Periode durch Vergleich der abgespeicherten Zählerstände die längste negative Halbwelle ermittelt werden. Der Sendeimpuls wird dann während der nächsten Periode des Störsignals während der Dauer der ermittelten längsten negativen Halbwelle ausgesandt.

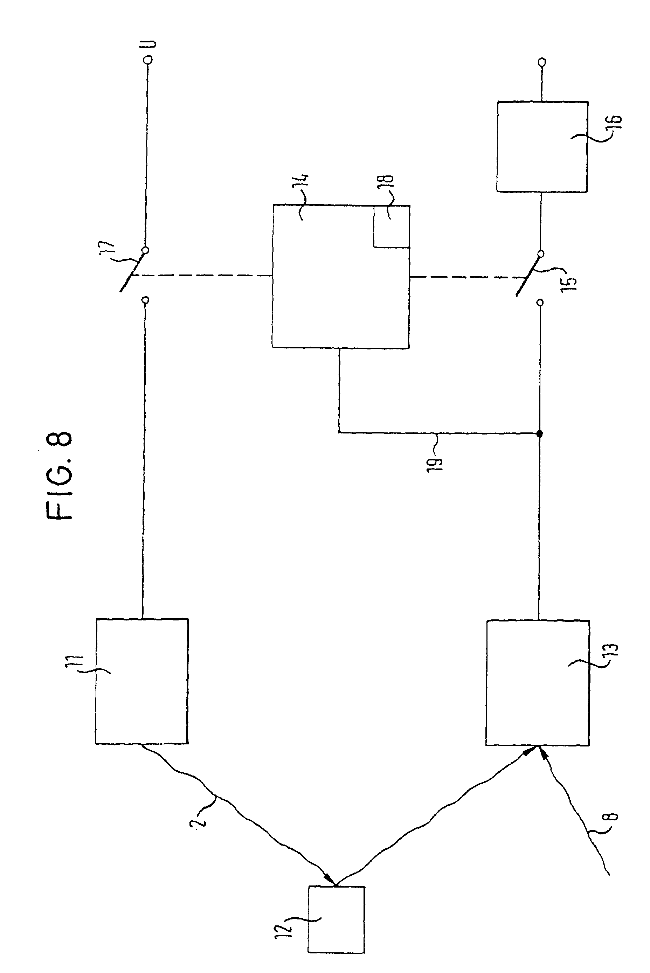

Das in Fig. 8 dargestellte Blockschaltbild eines erfindungsgemäß ausgebildeten Lichttasters zeigt einen Lichtsender 11, der einen Sendeimpuls 2 aussendet, welcher an einem im Überwachungsbereich vorhandenen Gegenstand 12 reflektiert wird. Der reflektierte Sendeimpuls wird zusammen mit einem Störsignal 8 von einem Lichtempfänger 13 empfangen, dessen Ausgang über eine Leitung 19 mit einer Störsignal-Auswerteeinheit 14 und über einen ersten Schalter 15 mit einer Gegenstandssignal-Auswerteeinheit 16 verbunden ist.

Der Lichtsender 11 ist über einen zweiten Schalter 17 mit einer Spannungsquelle U verbunden, wobei die Schalter 15 und 17 durch die Störsignal-Auswerteeinheit 14 synchron betätigbar sind. Während des Sendeintervalls T_{S} sind die Schalter 15, 17 geschlossen, so daß der Lichtsender 11 durch die über den Schalter 15 anliegende Spannung U einen Sendeimpuls 2 aussendet, der von dem Lichtempfänger 13 empfangen und über den Schalter 17 der Gegenstandssignal-Auswerteeinheit 16 zugeführt wird. Nach Aussenden des Sendeimpulses 2 werden die Schalter 15, 17 von der Störsignal-Auswerteeinheit 14 wieder geöffnet, so daß die empfangenen Störsignale 8 keine Beeinflussung der Gegenstandssignal-Auswerteeinheit 16 bewirken können. Die empfangenen Störsignale 8 werden über die Leitung 19 der Störsignal-Auswerteeinheit 14 zugeführt und von dieser zur Bestimmung des optimalen Sendezeitpunktes des nächsten Sendeimpulses 2 ausgewertet.

Dazu umfaßt die Störsignal-Auswerteeinheit 14 einen Zähler 18, der sowohl zur Bestimmung der Längen der negativen Halbwellen von Störsignalen als auch zur Realisierung der Wartezeiten T_{C} geeignet ist, wie es zu den Fig. 2 bis 7 beschrieben ist.

## Patentansprüche

1. Verfahren zum Betrieb eines optischen Lichttasters zur Feststellung von in einem Überwachungsbereich vorhandenen Gegenständen, bei dem in bestimmten zeitlichen Abständen Lichtsignale (2, 2', 2") in den Überwachungsbereich ausgesandt, die ausgesandten Lichtsignale (2, 2', 2") sowie auftretende Störsignale (3, 4, 8) empfangen und zur Feststellung der im Überwachungsbereich vorhandenen Gegenstände ausgewertet werden,
**dadurch gekennzeichnet,**
**daß** das Aussenden und Empfangen der Lichtsignale (2, 2', 2") sowie das Empfangen der Störsignale (3, 4, 8) jeweils in zeitlich aufeinanderfolgenden Rahmenintervallen (T_{R}) erfolgt, bei Abwesenheit eines Störsignals (3, 4, 8) innerhalb eines Rahmenintervalls (T_{R}) das Aussenden des Lichtsignals (2, 2', 2") am einen Norm-Sendezeitpunkt (t_{N}) des jeweiligen Lichtsignals (2, 2', 2") definierenden Ende des Rahmenintervalls (T_{R}) erfolgt, und bei Auftreten eines Störsignals (3, 4, 8) innerhalb eines Rahmenintervalls (T_{R}) das Aussenden des nächsten Lichtsignals (2, 2', 2") gegenüber seinem Norm-Sendezeitpunkt (t_{N}) zeitlich vorgezogen wird.

2. Verfahren nach Anspruch 1,
**dadurch gekennzeichnet,**
**daß** die Rahmenintervalle (T_{R}) im wesentlichen gleich lang sind, und/oder daß das innerhalb eines Rahmenintervalls (T_{R}) auftretende Störsignal als Wechsel-Störsignal (4, 8) oder als einmaliges Störsignal (3) klassifiziert wird und daß abhängig von der jeweiligen Klassifizierung bzw. von der Abwesenheit eines Störsignals (3, 4, 8) im Rahmenintervall (T_{R}) der Zeitpunkt für das Aussenden des Lichtsignals (2, 2', 2") bestimmt wird.

3. Verfahren nach einem der vorhergehenden Ansprüche,
**dadurch gekennzeichnet,**
**daß** bei einer ansteigenden und/oder abfallenden Flanke eines innerhalb eines Rahmenintervalls (T_{R}) auftretenden Störsignals (3, 4, 8) eine Wartezeit (T_{C}) ausgelöst und/oder vorzeitig beendet wird, und/oder daß jeweils eine Wartezeit (T_{C}) ausgelöst und/oder vorzeitig beendet wird, wenn ein innerhalb eines Rahmenintervalls (T_{R}) auftretendes Störsignal (3, 4, 8) einen positiven und/oder negativen Schwellenwert unter- und/oder überschreitet bzw. erreicht, und/oder daß jeweils eine Wartezeit (T_{C}) ausgelöst und/oder vorzeitig beendet wird, wenn ein innerhalb eines Rahmenintervalls (T_{R}) auftretendes Störsignal (3, 4, 8) einen positiven Schwellenwert überoder einen negativen Schwellenwert unterschreitet, und/oder daß jeweils eine Wartezeit (T_{C}) ausgelöst und/oder vorzeitig beendet wird, wenn innerhalb eines Rahmenintervalls bereits zwei Wartezeiten (T_{C}) ausgelöst wurden und vor Ablauf der zweiten Wartezeit (T_{C}) das Störsignal einen positiven Schwellenwert unter- oder einen negativen Schwellenwert überschreitet.

4. Verfahren nach Anspruch 3,
**dadurch gekennzeichnet,**
**daß** durch kurz hintereinander auftretendes Unter- oder Überschreiten bzw. Erreichen der Schwellenwerte nur eine Wartezeit (T_{C}) ausgelöst wird, und/oder daß die Schwellenwerte symmetrisch zum Nullpunkt gewählt werden, und/oder daß ein innerhalb eines Rahmenintervalls (T_{R}) auftretendes Störsignal als einmaliges Störsignal (3) klassifiziert wird, wenn innerhalb des Rahmenintervalls (T_{R}) die erste, die zweite oder die dritte Wartezeit (T_{C}) abläuft, und/oder daß ein innerhalb eines Rahmenintervalls (TR) auftretendes Störsignal als Wechsel-Störsignal (4, 8) klassifiziert wird, wenn eine innerhalb des Rahmenintervalls (T_{R}) ausgelöste dritte Wartezeit (T_{C}) vorzeitig beendet wird.

5. Verfahren nach einem der vorhergehenden Ansprüche,
**dadurch gekennzeichnet,**
**daß** bei einem innerhalb eines Rahmenintervalls (T_{R}) auftretenden Wechsel-Störsignal (4, 8), insbesondere einem periodischen Störsignal, mit zumindest einer positiven (9, 9') und einer negativen (5, 10, 10', 10'', 10"') Halbwelle das Lichtsignal (2, 2', 2'') während des Empfangs der negativen Halbwelle (5, 10''') ausgesandt wird, und/oder daß bei einem innerhalb eines Rahmenintervalls (T_{R}) auftretenden periodischen Störsignal (4, 8) mit mehreren unterschiedlich langen positiven (9, 9') und negativen (10, 10', 10'', 10''') Halbwellen das Lichtsignal (2, 2', 2'') während des Empfangs der längsten negativen Halbwelle (10''') ausgesandt wird.

6. Verfahren nach Anspruch 5,
**dadurch gekennzeichnet,**
**daß** der Beginn der ersten innerhalb eines Rahmenintervalls (T_{R}) auftretenden negativen Halbwelle (10) eines periodischen Störsignals (8) ausgehend von einem bestimmten Anfangswert, insbesondere von Null, einen Zählvorgang auslöst, daß der am Ende der negativen Halbwelle (10) erreichte, für die Dauer dieser Halbwelle (10) repräsentative Zählerstand mit dem Beginn der darauffolgenden positiven Halbwelle (9') gehalten wird, daß der Beginn der nächsten negativen Halbwelle (10') ausgehend von dem gehaltenen Zählerstand einen dem ersten Zählvorgang entgegengesetzt gerichteten Zählvorgang auslöst, und daß der mit Beginn der nächsten positiven Halbwelle (9'') erreichte End-Zählerstand zur Bestimmung der längeren negativen Halbwelle (10', 10''') ausgewertet wird, und/oder daß nach der Bestimmung der längeren negativen Halbwelle (10', 10"') das Lichtsignal (2, 2', 2'') während des Auftretens der nächsten längeren negativen Halbwelle (10"') ausgesandt wird, und/oder daß der erste Zählvorgang ein Aufwärtszählen und der zweite Zählvorgang ein Abwärtszähien ist und das Lichtsignal (2, 2', 2'') während des Auftretens der nächsten negativen Halbwelle (10") ausgesandt wird, wenn der End-Zählerstand größer als der Anfangswert, insbesondere positiv ist, und das Lichtsignal (2, 2', 2'') während des Empfangs der übernächsten negativen Halbwelle (10''') ausgesandt wird, wenn der End-Zählerstand kleiner als der Anfangswert, insbesondere negativ ist, und/oder daß der Beginn der ersten innerhalb eines Rahmenintervalls (T_{R}) auftretenden positiven Halbwelle (9) einen Zählvorgang auslöst und daß der Zählerstand am Ende der positiven Halbwelle (9) auf den Anfangswert zurückgesetzt wird, wenn der Beginn der ersten positiven Halbwelle (9) vor dem Beginn der ersten innerhalb des Rahmenintervalls (T_{R}) auftretenden negativen Halbwelle (10) liegt.

7. Verfahren nach einem der Ansprüche 5 oder 6,
**dadurch gekennzeichnet,**
**daß** die Dauer des Lichtsignals (2, 2', 2") und der Beginn des Aussendens des Lichtsignals (2, 2', 2'') so gewählt werden, daß das Aussenden des Lichtsignals (2, 2', 2'') noch vor dem Ende der negativen Halbwelle (5, 10''') beendet wird, und/oder daß der Beginn eines innerhalb eines Rahmenintervalls (T_{R}) einmalig auftretenden Störsignals (3) eine erste Wartezeit (T_{C}) auslöst und das Lichtsignal (2, 2', 2'') nach Ablauf der ersten Wartezeit (T_{C}) ausgesandt wird, wenn die erste Wartezeit (T_{C}) kürzer als die Dauer des Störsignals (3) ist, und/oder daß das Ende eines innerhalb eines Rahmenintervalls (T_{R}) einmalig auftretenden Störsignals (3) eine zweite Wartezeit (T_{C}) auslöst und das Lichtsignal (2, 2', 2") nach Ablauf der zweiten Wartezeit (T_{C}) ausgesandt wird, wenn innerhalb der zweiten Wartezeit (T_{C}) kein weiteres Störsignal (3, 4, 8) empfangen wird.

8. Verfahren nach einem der Ansprüche 3 bis 7,
**dadurch gekennzeichnet, daß** die Wartezeiten (T_{C}) durch Zählvorgänge und der Ablauf der Wartezeiten (T_{C}) durch Erreichen eines vorbestimmten Zählerstandes oder durch einen Zählerüberlauf realisiert werden, und/oder daß die Wartezeiten (T_{C}) gleich lang sind, und/oder daß das Rahmenintervall (T_{R}) verlängert wird, wenn das Ende der Wartezeit (T_{C}) zeitlich hinter dem Ende eines Normallänge aufweisenden Rahmenintervalls (T_{R}) liegt, wobei insbesondere das Rahmenintervall (T_{R}) bis zum Ablauf der Wartezeit (T_{C}) verlängert wird.

9. Verfahren nach einem der Ansprüche 4 bis 8,
**dadurch gekennzeichnet, daß** das Rahmenintervall (T_{R}) verlängert wird, wenn die negative Halbwelle, während der das nächste Lichtsignal (2, 2', 2'') ausgesandt werden soll, zeitlich hinter dem Ende eines Normallänge aufweisenden Rahmenintervalls (T_{R}) liegt, wobei insbesondere das Rahmenintervall (T_{R}) bis zum Aussenden des Lichtsignals verlängert wird.

10. Verfahren nach einem der vorhergehenden Ansprüche,
**dadurch gekennzeichnet,**
**daß** das empfangene Signal (6) von Gleichsignalanteilen bereinigt wird, und/oder daß das Aussenden des nächsten Lichtsignals (2") gegenüber seinem Norm-Sendezeitpunkt (t_{N}) um ein bestimmtes Zeitintervall (T_{V}) vorgezogen wird, wenn bis zum Beginn dieses Zeitintervalls (T_{V}) weder innerhalb des aktuellen Rahmenintervalls (T_{R}) noch innerhalb einer bestimmten Anzahl der vorhergehenden Rahmenintervalle (T_{R}) ein Störsignal (3, 4, 8) empfangen wurde, wobei insbesondere die Dauer des Zeitintervalls (T_{V}) fest vorbestimmt ist oder zufällig bestimmt wird, und/oder daß die Anzahl der vorhergehenden störungsfreien Rahmenintervalle (T_{R}) gleich drei ist.

11. Verfahren nach einem der vorhergehenden Ansprüche,
**dadurch gekennzeichnet,**
**daß** als Empfangssignal (6) zur Feststellung eines im Überwachungsbereich vorhandenen Gegenstandes die Pegeldifferenz zwischen dem während des Aussendens des Lichtsignals (2, 2', 2'') empfangenen Signal und dem kurz vor Aussenden des Lichtsignals (2, 2', 2'') empfangenen Signal ausgewertet wird, und/oder daß die Störsignalauswertung während des Aussendens des Lichtsignals (2, 2', 2'') unterbrochen wird, und/oder daß die Störsignalauswertung bis zum Abklingen der durch das ausgesandte Lichtsignal (2, 2', 2'') hervorgerufenen Überschwingvorgänge unterbrochen wird.

12. Optischer Lichttaster zur Feststellung von in einem Überwachungsbereich vorhandenen Gegenständen (12) ausgebildet zur Durchführung des Verfahrens nach einem der vorhergehenden Ansprüche mit einem Lichtsender (11) zum Aussenden von Lichtsignalen (2) in bestimmten zeitlichen Abständen, einem Lichtempfänger (13) zum Empfangen der ausgesandten Lichtsignale (2) sowie auftretender Störsignale (8), einer Gegenstandssignal-Auswerteeinheit (16) zur Auswertung der Empfangssignale (2, 8) während der Dauer des Aussendens eines Lichtsignals (2) und zur Erzeugung eines Gegenstand-Feststellungssignals, falls sich ein Gegenstand (12) im Überwachungsbereich befindet, einer Störsignal-Auswerteeinheit (14) zur Auswertung der empfangenen Störsignale (8) im Zeitintervall zwischen zwei aufeinanderfolgend ausgesandten Lichtsignalen (2) und zur Ansteuerung des Lichtsenders (11),
**dadurch gekennzeichnet,**
**daß** die Störsignal-Auswerteeinheit (14) einen Zähler (18) zur Bestimmung der Längen der negativen Halbwellen eines Wechsel-Störsignals (8) und/oder zur Erzeugung eines Steuersignals für die Aussendung eines Lichtsignals (2) durch den Lichtsender (11) bei Erreichen eines bestimmten Zählerstandes nach Auftreten eines einmaligen Störsignals (3) umfaßt.

13. Lichttaster nach Anspruch 12,
**dadurch gekennzeichnet,**
**daß** die Störsignal-Auswerteeinheit (14) eine Auslösestufe umfaßt, die bei Auftreten eines Wechsel-Störsignals (8) die Aussendung des Lichtsignals (2) während der negativen Halbwelle des Wechsel-Störsignals (8). bewirkt, und/oder daß die Auslösestufe die Aussendung des Lichtsignals (2) während der längsten negativen Halbwelle des Wechsel-Störsignals (8) bewirkt, und/oder daß der Lichtempfänger (13) nur während der Dauer des Aussendes eines Lichtsignals (2) mit der Gegenstandssignal-Auswerteeinheit (16) über eine Umschaltvorrichtung (15) verbunden ist.

## Claims

1. A method for operating an optical light sensor for detecting objects present in a monitored region in which light signals (2, 2', 2") are transmitted into the monitored region at specific time intervals, the transmitted light signals (2, 2', 2") and interference signals (3, 4, 8) which occur are received and evaluated for detecting objects present in the monitored region, **characterised in that** the transmission and reception of the light signals (2, 2', 2") and the reception of the. interference signals (3, 4, 8) take place in each case at frame intervals (T_{R}), which succeed one another timewise; when there is no interference signal (3, 4, 8) within a frame interval (T_{R}), the transmission of the light signal (2, 2', 2") takes place at the end of the frame interval (T_{R}) defining a standard transmission time (t_{N}) of the respective light signal (2, 2', 2'); and if an interference signal (3, 4, 8) occurs within a frame interval (T_{R}), the transmission of the next light signal (2, 2', 2') is delayed timewise relative to its standard transmission time (t_{N}).

2. A method in accordance with claim 1, **characterised in that** the frame intervals (T_{R}) are substantially of the same length; and/or **in that** the interference signal occurring within a frame interval (T_{R}) is classified as a changing interference signal (4, 8) or as a once only interference signal (3); and **in that** the time for the transmission of the light signal (2, 2', 2") is determined in dependence on the respective classification or on the absence of an interference signal (3, 4, 8) in the frame interval (T_{R}).

3. A method in accordance with any one of the preceding claims, **characterised in that** with an increasing and/or falling flank of an interference signal (3, 4, 8) occurring within a frame interval (T_{R}), a waiting time (T_{c}) is triggered and/or prematurely terminated; and/or **in that** a waiting time (T_{c}) is triggered and/or prematurely terminated in each case when an interference signal (3, 4, 8) occurring within a frame interval (T_{R}) falls short of and/or exceeds or reaches a positive and/or negative threshold value; and/or **in that** a waiting time (T_{c}) is triggered and/or prematurely terminated in each case when an interference signal (3, 4, 8) occurring within a frame interval (T_{R}) exceeds a positive threshold value or falls short of a negative threshold value; and/or **in that** a waiting time (T_{c}) is triggered and/or prematurely terminated in each case when two waiting times (T_{c}) have already been triggered within a frame interval and the interference signal falls short of a positive threshold value or exceeds a negative threshold value before the end of the second waiting time(T_{c}).

4. A method in accordance with claim 3, **characterised in that** only one waiting time (T_{c}) is triggered by a falling short of or exceeding or reaching the threshold values occurring shortly after one another; and/or **in that** the threshold values are selected to be symmetric to the zero point; and/or **in that** an interference signal occurring within a frame interval (T_{R}) is classified as a once only interference signal (3) when the first, the second or the third waiting time (T_{c}) ends within the frame interval; and/or **in that** an interference signal occurring within a frame interval (T_{R}) is classified as a changing signal (4, 8) when a third waiting time (T_{c}) triggered within the frame interval (T_{c}) is prematurely terminated.

5. A method in accordance with any one of the preceding claims, **characterised in that** with a changing interference signal (4, 8), in particular a periodic interference signal, occurring within a frame interval (T_{R}) with at least one positive (9, 9') and one negative (5, 10, 10', 10", 10"') half wave, the light signal (2, 2', 2") is transmitted during the reception of the negative half wave (5, 10"'); and/or **in that** with a periodic interference signal (4, 8) occurring within a frame interval (T_{R}) with a plurality of positive (9, 9') and negative (10, 10', 10", 10"') half waves of different lengths, the light signal (2, 2', 2") is transmitted during the reception of the longest negative half wave (10''').

6. A method in accordance with claim 5, **characterised in that** the start of the first negative half wave (10) of a periodic interference signal (8) occurring within a frame interval (T_{R}) starting from a specific initial value, in particular from zero, triggers a counting procedure; **in that** the count reached at the end of the negative half wave (10) and representative for the duration of this half wave (10) is held at the start of the succeeding positive half wave (9'); **in that** the start of the next negative half wave (10') starting from the held count triggers a counting procedure directed in the opposite direction to the first count; and that the end count reached at the start of the next positive half wave (9") is evaluated for determining the longer negative half wave (10', 10"'); and/or **in that** after the determination of the longer negative half wave (10', 10"'), the light signal (2, 2', 2") is transmitted during the occurrence of the next longer negative half wave (10"'); and/or **in that** the first counting procedure is an upward counting procedure and the second counting procedure is a downward counting procedure and the light signal (2, 2', 2") is transmitted during the occurrence of the next negative half wave (10") when the end count is greater than the initial value, in particular positive, and the light signal (2, 2', 2") is transmitted during the reception of the next but one negative half wave (10"'), when the end count is smaller than the initial value, is in particular negative; and/or **in that** the start of the first positive half wave (9) occurring within a frame interval (T_{R}) triggers a counting procedure; and **in that** the count is reset to the initial value at the end of the positive half wave (9) when the start of the first positive half wave (9) lies before the start of the first negative half wave (10) occurring within the frame interval (T_{R}).

7. A method in accordance with any of claims 5 or 6, **characterised in that** the duration of the light signal (2, 2', 2"') and the start of the transmission of the light signal (2, 2', 2") are selected such that the transmission of the light signal (2, 2', 2") is terminated before the end of the negative half wave (5, 10"'); and/or **in that** the start of an interference signal (3) occurring once within a frame interval (T_{R}) triggers a first waiting time (T_{c}) and the light signal (2, 2', 2") is transmitted after the end of the first waiting time (T_{c}) when the first waiting time (T_{c}) is shorter than the duration of the interference signal (3); and/or **in that** the end of an interference signal (3) occurring once within a frame interval (T_{R}) triggers a second waiting time (T_{c}) and the light signal (2, 2', 2") is transmitted after the end of the second waiting time (T_{c}) when no further interference signal (3, 4, 8) is received during the second waiting time (T_{c}).

8. A method in accordance with any one of claims 3 to 7, **characterised in that** the waiting times (T_{c}) are realised by counting procedurees and the end of the waiting times (T_{c}) is realised by reaching a pre-determined count or by a count overrun; and/or **in that** the waiting times (T_{c}) are of the same length; and/or **in that** the frame interval (T_{R}) is extended when the end of the waiting time (T_{c}) is timewise after the end of a frame interval (T_{R}) having a normal length, with in particular the frame interval (T_{R}) being extended up to the end of the waiting time (T_{c}).

9. A method in accordance with any one of claims 4 to 8, **characterised in that** the frame interval (T_{R}) is extended when the negative half wave, during which the next light signal (2, 2', 2") should be sent out, is timewise after the end of a frame interval (T_{R}) having a normal length, with in particular the frame interval (T_{R}) being extended up to the transmission of the light signal.

10. A method in accordance with any one of the preceding claims, **characterised in that** the received signal (6) is free of DC signal components; and/or **in that** the transmission of the next light signal (2") is brought forward by a specific time interval (T_{V}) relative to its standard transmission time (t_{N})when an interference signal (3, 4, 8) was not received up to the start of this time interval (T_{V}) either within the current frame interval (T_{R}) or within a specific number of the preceding frame intervals (T_{R}), with in particular the duration of the time interval (T_{V}) being fixedly pre-determined or randomly determined; and/or **in that** the number of preceding interference-free frame intervals (T_{R}) is equal to three.

11. A method in accordance with any one of the preceding claims, **characterised in that** the level difference between the signal received during the transmission of the light signal (2, 2', 2") and the signal received shortly before the transmission of the light signal (2, 2', 2") is evaluated as the received signal (6) for detecting an object present in the monitored region; and/or **in that** the interference signal evaluation is interrupted during the transmission of the light signal (2, 2', 2"); and/or **in that** the interference signal evaluation is interrupted up to the decaying of the overshoot processes caused by the transmitted light signal (2, 2', 2").

12. An optical light sensor for detecting objects (12) present in a monitored region, designed for carrying out the method in accordance with any one of the preceding claims, with a light transmitter (11) for transmitting light signals (2) at specific time intervals, with a light receiver (13) for receiving the transmitted light signals (2) and occurring interference signals (8), with an object signal evaluation unit (16) for evaluating the received signals (2, 8) during the duration of the transmission of a light signal (2) and for producing an object detection signal, if an object (12) is located in the monitored region, with an interference signal evaluation unit (14) for evaluating the received interference signals (8) in the time interval between two light signals (2) transmitted in succession and for control of the light sensor (11), **characterised in that** the interference signal evaluation unit (14) includes a counter (18) for determining the lengths of the negative half waves of a changing interference signal (8) and/or for producing a control signal for the transmission of a light signal (2) by the light transmitter (1) on reaching a specific count after the occurrence of a once only interference signal (3).

13. A light sensor in accordance with claim 12, **characterised in that** the interference signal evaluation unit (14) includes a trigger stage which effects the transmission of the light signal (2) during the negative half wave of the changing interference signal (8) when a changing interference signal (8) occurs; and/or **in that** the trigger stage effects the transmission of the light signal (2) during the longest negative half wave of the change interference signal (8); and/or **in that** the light receiver (13) is only connected to the object signal evaluation unit (16) via a switch over apparatus (15) during the duration of the transmission of a light signal (2).

## Revendications

1. Procédé pour le fonctionnement d'un détecteur optique pour constater la présence d'objets dans une zone de surveillance, dans lequel on émet à des intervalles temporels déterminés des signaux lumineux (2, 2', 2") dans la zone de surveillance, on reçoit les signaux lumineux émis (2, 2', 2") ainsi que des signaux parasites apparus (3, 4, 8), et on les évalue pour constater la présence d'objets dans la zone de surveillance, **caractérisé en ce que** l'émission et la réception des signaux lumineux (2, 2', 2") ainsi que la réception des signaux parasites (3, 4, 8) s'effectuent chacune à des intervalles de trame temporels successifs (T_{R}), en cas d'absence d'un signal parasite (3, 4, 8) à l'intérieur d'un intervalle de trame (T_{R}) l'émission du signal lumineux (2, 2', 2") a lieu à la fin de l'intervalle de trame (T_{R}) définissant un instant d'émission normal (t_{N}) du signal lumineux respectif (2, 2', 2"), et lors de l'apparition d'un signal parasite (3, 4, 8) à l'intérieur d'un intervalle de trame (T_{R}) l'émission du prochain signal lumineux (2, 2', 2") est avancée dans le temps par rapport à son instant d'émission normal (t_{N}).

2. Procédé selon la revendication 1, **caractérisé en ce que** les intervalles de trame (T_{R}) présentent sensiblement la même longueur, et/ou **en ce que** le signal parasite apparaissant à l'intérieur d'un intervalle de trame (T_{R}) est classé comme signal parasite variable (4, 8) ou comme signal parasite unique (3), et **en ce que** l'instant pour l'émission du signal lumineux (2, 2', 2") est déterminé en fonction de la classification respective ou de l'absence d'un signal parasite (3, 4, 8) dans l'intervalle de trame (T_{R}).

3. Procédé selon l'une des revendications précédentes, **caractérisé en ce que** lors d'un flanc ascendant et/ou descendant d'un signal parasite (3, 4, 8) apparaissant à l'intérieur d'un intervalle de trame (T_{R}), une période d'attente (T_{C}) est déclenchée et/ou terminée de manière précoce, et/ou **en ce qu'**une période d'attente respective (T_{C}) est déclenchée et/ou terminée de façon précoce lorsqu'un signal parasite (3, 4, 8) apparaissant à l'intérieur d'un intervalle de trame (T_{R}) passe au-dessous et/ou au-dessus ou atteint une valeur seuil positive et/ou négative, et/ou **en ce qu'**une période d'attente respective (T_{C}) est déclenchée et/ou terminée de façon précoce lorsqu'un signal parasite (3, 4, 8) apparaissant à l'intérieur d'un intervalle de trame (T_{R}) passe au-dessus d'une valeur seuil positive ou au-dessous d'une valeur seuil négative, et/ou **en ce qu'**une période d'attente respective (T_{C}) est déclenchée et/ou terminée de façon précoce lorsque deux périodes d'attente (T_{C}) ont déjà été déclenchées à l'intérieur d'un intervalle de trame et qu'avant écoulement de la deuxième période d'attente (T_{C}) le signal parasite passe au-dessous d'une valeur seuil positive ou au-dessus d'une valeur seuil négative.

4. Procédé selon la revendication 3, **caractérisé en ce qu'**une seule période d'attente (T_{C}) est déclenchée par un passage au-dessous ou au-dessus ou par une atteinte des valeurs seuils qui s'effectuent brièvement les uns après les autres, et/ou **en ce que** les valeurs seuils sont choisies symétriquement par rapport au point zéro, et/ou **en ce qu'**un signal parasite apparaissant à l'intérieur d'un intervalle de trame (T_{R}) est classé comme signal parasite unique (3) lorsque la première, la deuxième ou la troisième période d'attente (T_{C}) s'écoule à l'intérieur de l'intervalle de trame (T_{R}), et/ou **en ce qu'**un signal parasite apparaissant à l'intérieur d'un intervalle de trame (T_{R}) est classé comme signal parasite variable (4, 8) lorsqu'une troisième période d'attente (T_{C}) est terminée de façon précoce à l'intérieur de l'intervalle de trame (T_{R}).

5. Procédé selon l'une quelconque des revendications précédentes, **caractérisé en ce que** lors d'un signal parasite variable (4, 8) apparaissant à l'intérieur d'un intervalle de trame (T_{R}), en particulier lors d'un signal parasite périodique, avec au moins une demi-onde positive (9, 9') et une demi-onde négative (5, 10, 10', 10", 10"'), le signal lumineux (2, 2', 2") est émis pendant la réception de la demi-onde négative (5, 10"'), et/ou lors d'un signal parasite périodique (4, 8) apparaissant à l'intérieur d'un intervalle de trame (T_{R}) avec plusieurs demi-ondes positives (9, 9') et négatives (10, 10', 10", 10"') de longueurs différentes, le signal lumineux (2, 2', 2") est émis pendant la réception de la demi-onde négative (10"') la plus longue.

6. Procédé selon la revendication 5, **caractérisé en ce que** le début de la première demi-onde négative (10), apparaissant à l'intérieur d'un intervalle de trame (T_{R}), d'un signal parasite périodique (8), à partir d'une certaine valeur initiale, en particulier de zéro, déclenche une opération de comptage, **en ce que** l'état du compteur atteint à la fin de la demi-onde négative (10) et représentatif de la durée de cette demi-onde (10) est maintenu avec le début de la demi-onde positive (9') qui suit, **en ce que** le début de la prochaine demi-onde négative (10') à partir de l'état de comptage maintenu déclenche une opération de comptage dirigée en sens opposé à la première opération de comptage, et **en ce que** l'état de comptage final atteint avec le début de la prochaine demi-onde positive (9") est évalué pour déterminer la demi-onde négative (10', 10"') plus longue, et/ou **en ce qu'**après la détermination de la demi-onde négative (10', 10"') plus longue le signal lumineux (2, 2', 2") est émis pendant l'apparition de la prochaine demi-onde négative (10"') plus longue, et/ou **en ce que** la première opération de comptage est un comptage vers le haut et la deuxième opération de comptage est un comptage vers le bas et le signal lumineux (2, 2', 2") est émis pendant l'apparition de la prochaine demi-onde négative (10"), lorsque l'état de comptage final est supérieur à la valeur initiale, en particulier positif, et le signal lumineux (2, 2', 2") est émis pendant la réception de la demi-onde négative (10"') suivant la prochaine lorsque l'état de comptage final est inférieur à la valeur initiale, en particulier négatif, et/ou **en ce que** le début de la première demi-onde positive (9) apparaissant à l'intérieur d'un intervalle de trame (T_{R}) déclenche une opération de comptage et **en ce que** l'état de comptage est ramené à la valeur initiale à la fin de la demi-onde positive (9) lorsque le début de la première demi-onde positive (9) se trouve avant le début de la première demi-onde négative (10) apparaissant à l'intérieur de l'intervalle de trame (TR).

7. Procédé selon l'une ou l'autre des revendications 5 et 6, **caractérisé en ce qu'**on choisit la durée du signal lumineux (2, 2', 2") et le début de l'émission du signal lumineux (2, 2', 2") de telle sorte que l'émission du signal lumineux (2, 2', 2") est terminée encore avant la fin de la demi-onde négative (5, 10"'), et/ou **en ce que** le début d'un signal parasite (3) apparaissant une seule fois à l'intérieur d'un intervalle de trame (T_{R}) déclenche une première période d'attente (T_{C}) et le signal lumineux (2, 2', 2") est émis après écoulement de la première période d'attente (T_{C}) lorsque la première période d'attente (T_{C}) est plus courte que la durée du signal parasite (3), et/ou **en ce que** la fin d'un signal parasite (3) apparaissant une seule fois à l'intérieur d'un intervalle de trame (T_{R}) déclenche une deuxième période d'attente (T_{C}) et le signal lumineux (2, 2', 2") est émis après écoulement de la deuxième période d'attente (T_{C}) lorsque aucun autre signal parasite (3, 4, 8) n'est reçu à l'intérieur de la deuxième période d'attente (T_{C}).

8. Procédé selon l'une quelconque des revendications 3 à 7, **caractérisé en ce que** les périodes d'attente (T_{C}) sont réalisées par des opérations de comptage et l'écoulement des périodes d'attente (T_{C}) est réalisé par atteinte d'un état de comptage prédéterminé ou par dépassement du compteur, et/ou **en ce que** les périodes d'attente (T_{C}) présentent la même longueur, et/ou **en ce que** l'intervalle de trame (T_{R}) est prolongé lorsque la fin de la période d'attente (T_{C}) se trouve temporellement après la fin d'un intervalle de trame (T_{R}) présentant une longueur normale, en particulier l'intervalle de trame (T_{R}) étant prolongé jusqu'à écoulement de la période d'attente (T_{C}).

9. Procédé selon l'une quelconque des revendications 4 à 8, **caractérisé en ce que** l'intervalle de trame (T_{R}) est prolongé lorsque la demi-onde négative pendant laquelle le prochain signal lumineux (2, 2', 2") doit être émis se trouve temporellement après la fin d'un intervalle de trame (T_{R}) présentant une longueur normale, en particulier l'intervalle de trame (T_{R}) étant prolongé jusqu'à l'émission du signal lumineux.

10. Procédé selon l'une quelconque des revendications précédentes, **caractérisé en ce que** le signal reçu (6) est débarrassé des parts de signal, et/ou **en ce que** l'émission du prochain signal lumineux (2") est avancée d'un certain intervalle temporel (T_{V}) par rapport à son instant d'émission normal (t_{N}) lorsque, jusqu'au début de cet intervalle temporel (T_{V}), aucun signal parasite (3, 4, 8) n'a été reçu ni à l'intérieur de l'intervalle de trame actuel (T_{R}) ni à l'intérieur d'un certain nombre d'intervalles de trame précédents (T_{R}), en particulier la durée de l'intervalle temporel (T_{V}) étant fermement prédéterminée ou déterminée par voie aléatoire, et/ou **en ce que** le nombre des intervalles de trame précédents (T_{R}) exempts de perturbation est égal à trois.

11. Procédé selon l'une quelconque des revendications précédentes, **caractérisé en ce que** l'on évalue, à titre de signal de réception (6) pour la constatation de la présence d'un objet dans la zone de surveillance, la différence de niveau entre le signal reçu pendant l'émission du signal lumineux (2, 2', 2") et le signal reçu peu avant l'émission du signal lumineux (2, 2', 2"), et/ou **en ce que** l'évaluation du signal parasite est interrompue pendant l'émission du signal lumineux (2, 2', 2"), et/ou **en ce que** l'évaluation du signal parasite est interrompue jusqu'à atténuation des phénomènes de sur-oscillation causés par le signal lumineux émis (2, 2', 2").

12. Détecteur optique pour la constatation d'objets (12) présents dans une zone de surveillance, réalisé pour mettre en oeuvre le procédé selon l'une quelconque des revendications précédentes, comportant un émetteur de lumière (11) pour émettre des signaux lumineux (2) à des intervalles temporels déterminés, un récepteur de lumière (13) pour recevoir les signaux lumineux émis (2) ainsi que des signaux parasites (8) apparaissant, une unité d'évaluation (16) du signal d'objet pour évaluer les signaux de réception (2, 8) pendant la durée de l'émission d'un signal lumineux (2) et pour générer un signal de constatation d'objet au cas où un objet (12) se trouverait dans la zone de surveillance, une unité d'évaluation (14) de signal parasite pour évaluer les signaux parasites reçus (8) dans l'intervalle temporel entre deux signaux lumineux (2) émis successivement l'un après l'autre et pour piloter l'émetteur de lumière (11), **caractérisé en ce que** l'unité d'évaluation (14) du signal parasite comprend un compteur (18) pour déterminer les longueurs des demi-ondes négatives d'un signal parasite variable (8) et/ou pour générer un signal de commande pour l'émission d'un signal lumineux (2) par l'émetteur de lumière (11) lorsqu'un certain état de comptage est atteint après apparition d'un signal parasite unique (3).

13. Détecteur optique selon la revendication 12, **caractérisé en ce que** l'unité d'évaluation (14) du signal parasite comprend un étage de déclenchement qui, lors de l'apparition d'un signal parasite variable (8), provoque l'émission du signal lumineux (2) pendant la demi-onde négative du signal parasite variable (8), et/ou **en ce que** l'étage de déclenchement provoque l'émission du signal lumineux (2) pendant la demi-onde négative la plus longue du signal parasite variable (8), et/ou **en ce que** le récepteur de lumière (13) est connecté à l'unité d'évaluation (16) du signal d'objet via un dispositif de commutation (15) uniquement pendant la durée de l'émission d'un signal lumineux (2).
